(19) Europäisches Patentamt / European Patent Office / Office européen des brevets

(11) **EP 4 281 929 B1**

(12) **EUROPEAN PATENT SPECIFICATION**

(45) Date of publication and mention
of the grant of the patent:
**17.12.2025 Bulletin 2025/51**

(21) Application number: **22703288.5**

(22) Date of filing: **17.01.2022**

(51) International Patent Classification (IPC):
**G06T 7/00** *(2017.01)*        **G06T 7/181** *(2017.01)*

(52) Cooperative Patent Classification (CPC):
**G06T 7/0012; G06T 7/181;** G06T 2207/10116;
G06T 2207/20084; G06T 2207/30101

(86) International application number:
**PCT/EP2022/050848**

(87) International publication number:
**WO 2022/157104 (28.07.2022 Gazette 2022/30)**

(54) **VESSEL SHAPE**

GEFÄSSFORM

FORME DE VAISSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2021 PCT/CN2021/072696**

(43) Date of publication of application:
**29.11.2023 Bulletin 2023/48**

(73) Proprietor: **Koninklijke Philips N.V.
5656 AG Eindhoven (NL)**

(72) Inventors:
• **HAO, Zhangpeng
5656 AG Eindhoven (NL)**
• **GAO, Haitao
5656 AG Eindhoven (NL)**

(74) Representative: **Philips Intellectual Property &
Standards
High Tech Campus 52
5656 AG Eindhoven (NL)**

(56) References cited:
**US-A1- 2016 328 855**

• **BOZKURT FERHAT ET AL: "An inverse approach
for automatic segmentation of carotid and
vertebral arteries in CTA", EXPERT SYSTEMS
WITH APPLICATIONS, vol. 93, 1 March 2018
(2018-03-01), pages 358 - 375, XP085277934,
ISSN: 0957-4174, DOI: 10.1016/
J.ESWA.2017.10.041**
• **LITJENS GEERT ET AL: "A survey on deep
learning in medical image analysis", MEDICAL
IMAGE ANALYSIS, vol. 42, 1 December 2017
(2017-12-01), pages 60 - 88, XP085240547, ISSN:
1361-8415, DOI: 10.1016/J.MEDIA.2017.07.005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

The invention relates to a method, a tangible machine-readable medium and device for determining vessel shape from, for example, computed tomography (CT) imaging data.

BACKGROUND OF THE INVENTION

A subject's body may be imaged, for example, using a CT imaging apparatus for various purposes such as diagnostics, medical intervention, etc. A three-dimensional (volume) reconstruction image and/or associated multiplanar reconstruction (MPR) images obtained from imaging data such as a set of CT imaging slices may show various anatomical structures within a subject's body. However, certain structures such as vessels (e.g., blood vessels such as arteries and veins) may not be readily identifiable in the reconstructed image.

For example, during analysis of head and neck vessels in certain post processing applications, a user such as a clinician or other imaging apparatus operator may define a vessel by extracting (e.g., identifying) the vessel and naming the vessel manually on the image. This extraction/naming procedure may be performed in conjunction with observation and/or measurement of a possible lesion. It may take the user a few minutes to perform this extraction and naming procedure, especially when the vessels are long and/or have a complex curvature.

The time spent by user during vessel extraction and accuracy of the vessel extraction may be highly dependent on the user's experience.

US 2016/0328855 discloses concepts for vasculature visualization in medical images. In particular, vessel structures are segmented from the medical image resulting in a vessel mask, which is then refined using information related to bone structures from a bone segmentation of the medical image.

SUMMARY OF THE INVENTION

Aspects or embodiments described herein may relate to vessel shape determination, or segmentation, based on certain radiographic imaging data. Such vessel shape determination/segmentation may be performed automatically with minimal or no user input. Aspects or embodiments described herein may obviate one or more problems associated with user (i.e., human) identification of the vessel shape from the radiographic imaging data.

In a first aspect, a method is described according to claim 1.

Some embodiments relating to the first and other aspects are described below.

In some embodiments, the ML model comprises a Deep Q Network, DQN, model.

In some embodiments, the ML model is trained to recognize the set of landmarks based on a training data set comprising radiographic imaging data obtained from a plurality of training subjects, wherein the radiographic imaging data obtained from each training subject comprises a target vessel annotated with the set of landmarks to be recognized.

In some embodiments, determining the path comprises identifying a pixel intensity threshold within the radiographic imaging data. The pixel intensity threshold may be indicative of identified landmarks being connected to form the path.

In some embodiments, the pixel intensity threshold is determined based on a minimum pixel intensity value and/or an average pixel intensity value associated with each of the identified landmarks.

In some embodiments, estimating the profile of the path comprises determining a shortest path between the adjacent landmarks by setting a first landmark as a seed point and, within an iteratively growing volumetric region, identifying a second landmark corresponding to the nearest landmark to the first landmark such that coordinates associated with the first and second landmarks define the path between the first and second landmarks.

In some embodiments, the imaging condition indicative of the wall of the vessel is based on a gradient condition indicative of presence of the wall.

In some embodiments, the method comprises determining a coordinate corresponding to a center point of the vessel that defines an origin according to a local coordinate system and determining the shape of the vessel within a vessel cross-section that is perpendicular to the path at the origin by simulating a plurality of rays extending radially from the origin until the gradient condition is met for each radial ray at a specified distance from the origin. The specified distance of each radial ray from the origin may be used to estimate a boundary within the vessel cross-section corresponding to at least part of the shape of the vessel.

In some embodiments, the method comprises determining a vessel segment corresponding to the shape of the vessel between adjacent landmarks by connecting estimated boundaries from adjacent vessel cross-sections.

In some embodiments, the gradient condition is determined based on a gradient model of pixel intensity values in a vessel cross-section.

In some embodiments, the vessel comprises an internal carotid artery, ICA, and/or vertebral artery, VA. The set of landmarks may comprise a specified set of landmarks, LX, from at least one of the subject's ICA and VA identified by the ML model. Each landmark, LX, of the specified set may have an associated index, X, and corresponding anatomical feature location as follows:

L0 is shared by the ICA and VA and is located at the brachiocephalic trunk of the subject's aortic arch;

L1 is located at the common carotid artery of the aortic arch;

L2 is located at the subclavian artery of the aortic arch;

L3 and L4 are located at a bifurcation point of the ICA and the subject's external carotid artery;

L5 and L8 are locations of the ICA around the subject's C6 cervical vertebra;

L9 and L14 are locations of the VA around the subject's C6 cervical vertebra;

L6 and L7 are locations of the ICA around the subject's C2 cervical vertebra;

L10 and L13 are locations of the VA around the subject's C2 cervical vertebra;

L11 and L12 are locations of the ICA around the subject's C1 cervical vertebra;

L15 and L18 are locations of the VA around the subject's C1 cervical vertebra;

L16 and L17 are locations of the ICA where blood is transferred to structures inside and outside of the skull;

L19 and L22 are locations of the VA on the subject's posterior fossa where the VA enters the subject's skull;

L20, L21, L23 and L24 are locations of the ICA inside the skull; and

L25 is a location shared by both the subject's left VA and right VA.

In some embodiments, the method comprises causing a user interface for displaying a simulation of the subject's body to indicate the shape of the vessel via the user interface.

In a second aspect, a tangible machine-readable medium is described. The tangible machine-readable medium comprises instructions which, when executed by at least one processor, cause the at least one processor to implement the method according to any of the first aspect or related embodiments.

In a third aspect, a device is described according to claim 13.

These and other aspects of the invention will be apparent from and elucidated with reference to the embodiment(s) described hereinafter.

BRIEF DESCRIPTION OF DRAWINGS

Exemplary embodiments of the invention will now be described, by way of example only, with reference to the following drawings, in which:

Figure 1 refers to a method of determining a vessel shape according to an embodiment;
Figure 2 is a schematic drawing of a system for determining a vessel shape according to an embodiment;
Figure 3 refers to a method of determining a vessel shape according to an embodiment;

Figures 4 and 5 show various views of three-dimensional reconstructed images of a subject's body from radiographic imaging data;
Figure 6 shows a representation of detected landmarks in the subject's body according to an embodiment;
Figure 7 is schematic drawing of a model of a vessel cross-section according to an embodiment;
Figure 8 refers to a method of extracting the path between connected landmarks according to an embodiment;
Figure 9 refers to a method of determining a boundary of a vessel according to an embodiment;
Figure 10 shows a result of the vessel shape determination procedure according to an embodiment;
Figure 11 is a schematic drawing of a machine-readable medium for determining a vessel shape according to an embodiment; and
Figure 12 is a schematic drawing of a device for determining a vessel shape according to an embodiment.

DETAILED DESCRIPTION OF THE EMBODIMENTS

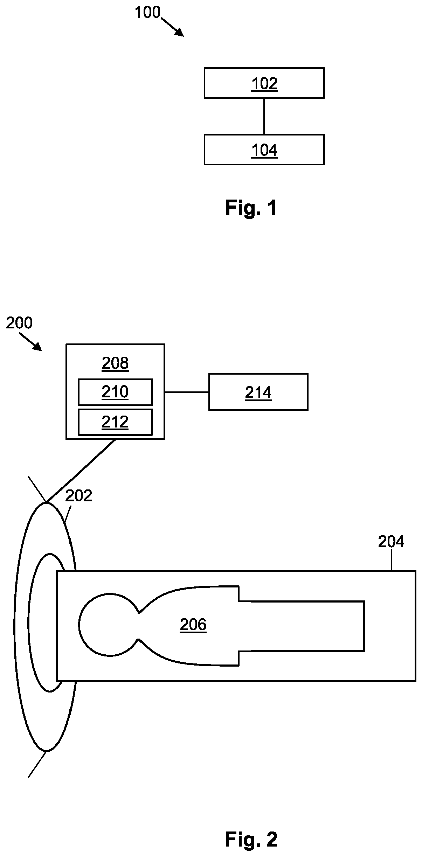

Figure 1 shows a method 100 (e.g., a computer-implemented method) of determining a vessel shape. The method 100 may be implemented by a computer such as a user computer communicatively coupled to a user interface, or a server or cloud-based service (e.g., communicatively coupled to the user computer and/or user interface).

The method 100 comprises, at block 102, identifying a set of landmarks of a vessel in a subject's body using a machine learning, ML, model configured to identify adjacent landmarks of the vessel from radiographic imaging data of the subject's body.

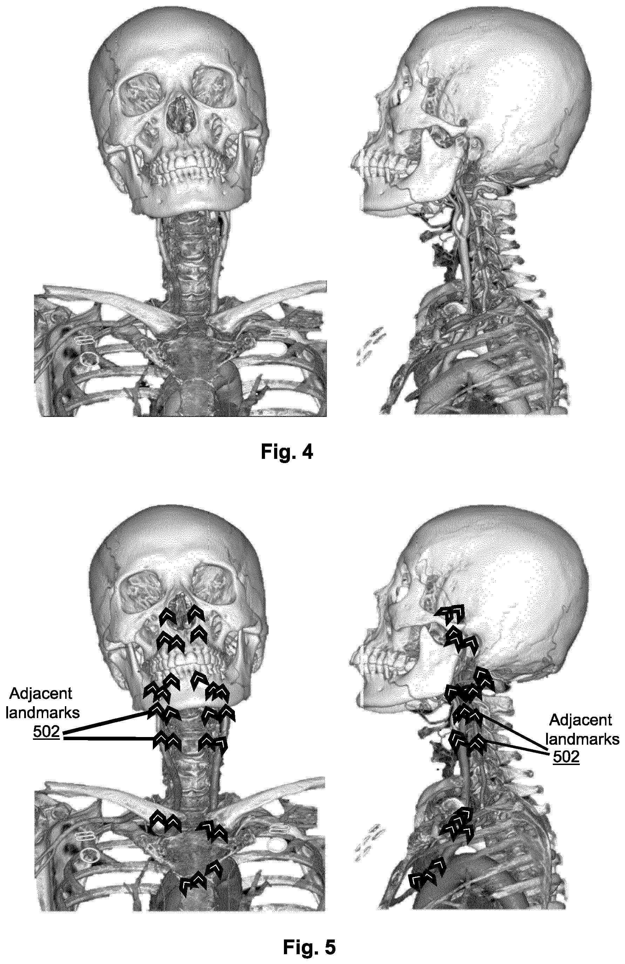

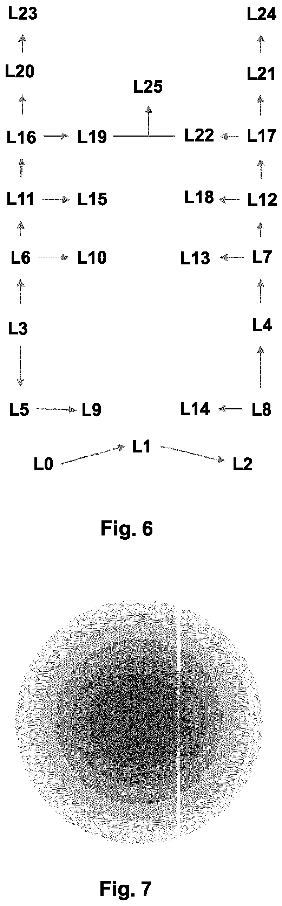

As depicted by Figures 5 and 6 (described in more detail below), a 'landmark' refers to a location within the subject's body associated with the vessel. Vessels within the body may be considered to be associated with the anatomical structure of the body. The anatomical structure of the body may refer to the arrangement of the bones and tissue in the body. Although there may be some differences between each subject, the anatomical structure may be expected to be similar for each subject. Thus, certain vessels in the subject's body may have an expected profile and/or shape in relation to the subject's anatomical features.

The ML model may be trained to identify the set of landmarks, which may be pre-determined based on the anatomical structure. For example, the ML model (which, in some embodiments, comprises a Deep Q Network, DQN, model) described in more detail below may be trained to identify landmarks associated with at least one of the subject's internal carotid artery (ICA) and/or vertebral artery (VA) in the head, neck and/or chest region of the subject's body (although a similar procedure may be used to identify landmarks associated with other vessels in the subject's body). From a user's perspective, these landmarks may be distinguishable from each other based on certain factors such as distance from each other, proximity to anatomical features such as bones, organs, etc. Such factors may or may not be taken into account by the ML model when identifying the set of landmarks. For example, upon being trained, the ML model may attach an appropriate weight to any information derived from the radiographic imaging data to facilitate landmark identification using the ML model. By appropriate selection of the set of landmarks to be used for training (e.g., by a human expert based on the anatomical structure), the ML model may be capable of repeatable and accurate identification of the set of landmarks in each subject.

The radiographic imaging data may refer to the raw data obtained from a radiographic imaging apparatus such as a CT scanner and/or may refer to processed data derived from the raw data, such as three-dimensional reconstruction images and/or associated MPR images.

The method 100 further comprises, at block 104, determining a path comprising identified adjacent landmarks in the set.

In some embodiments described below, the path may be determined based on various information sources such as a pixel intensity threshold indicative of the path connecting adjacent landmarks in the set and/or identifying the nearest landmark within a grown region within the radiographic imaging data.

Accordingly, the identification of connected landmarks of the vessel(s) may allow a path to be identified in the radiographic imaging data. Such a path may correspond to the profile (e.g., a centerline) of the vessel(s).

Block 104 further comprises determining a shape of the vessel between the identified adjacent landmarks based on the determined path and an imaging condition indicative of a wall of the vessel.

The imaging condition indicative of the wall of the vessel may refer to part of the radiographic imaging data (e.g., at least one pixel in the radiographic imaging data) that appears to correspond to a structure that appears to represent a wall of the vessel. For example, if the vessel has an elliptical (e.g., including circular) cross-section as determined based on the imaging condition, the part of the radiographic imaging data in the vicinity of an identified landmark that meets the imaging condition may be regarded as the wall of the vessel. In this manner, the combination of the information about the path (e.g., the centerline) of the vessel with the information about the wall of the vessel at each relevant point along the path (e.g., a center-point of the vessel at each of the identified landmarks) may be used to determine the shape of the vessel between connected landmarks. This determination of the vessel shape may be referred to as 'vessel segmentation'. By determining the vessel shape, a user interface may be able to highlight the shape of the vessel in radiographic images (e.g., three-dimensional reconstruction images and/or MPR images) of the subject's body. For example, the vessel may be highlighted with a different color to the rest of the structures in the image, may be annotated with text, etc., so that the user can visualize and/or more easily or accurately identify or the vessel in the image.

Accordingly, certain methods described herein (e.g., the method 100 and other methods described below) may be capable of automatically identifying certain vessels in the subject's body with minimal or no human input. This identification may include extracting and/or naming vessels so that a user interface for visualizing processed radiographic imaging data of a subject's body can display and/or highlight the vessel shape. This may save user time and/or assist the user to reduce vessel identification errors. The automatic extraction of a vessel from radiographic imaging data may help to analyze such a vessel efficiently and accurately, which may be useful in certain procedures involving lesion identification and/or measurement.

Figure 2 shows a system 200 comprising certain components for implementing certain methods described herein (e.g., method 100 and other methods described below). The system 200 comprises a radiographic imaging apparatus (e.g., a CT scanner or other type of radiographic imaging apparatus such as a magnetic resonance imaging (MRI) scanner) 202, couch 204 and a subject 206 (e.g., a patient) supported by the couch 204. The radiographic imaging apparatus 202 is communicatively coupled to a computer 208 configured to receive radiographic imaging data from the radiographic imaging apparatus 202. The computer 208 comprises memory 210 (e.g., a tangible machine-readable medium) storing instructions for implementing certain methods described herein and at least one processor 212 for executing the instructions. The computer 208 is communicatively coupled to a user interface 214 (e.g., a display) providing certain information derived from the radiographic imaging data. For example, a three-dimensional reconstruction image and/or MPR image of the subject's body may be displayed on the user interface 214. In addition, the output from certain methods described herein (e.g., method 100) may be displayed on the user interface 214.

The computer 208 and/or user interface 214 may be implemented locally or remotely. For example, the computer 208 may be a local machine (e.g., a user computer in the vicinity of the radiographic imaging apparatus 202 or at another location) or a remote machine or computing system (e.g., a server and/or the cloud). The user interface 214 may be implemented locally (e.g., in the vicinity of the radiographic imaging apparatus 202 such as in a hospital where the radiographic imaging apparatus 202 is located) or at a remote location (e.g., where the analysis is performed collaboratively with the involvement of an expert at the remote location).

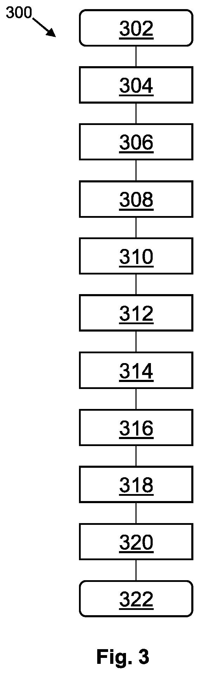

Figure 3 shows a method 300 (e.g., a computer-implemented method) of determining a vessel shape.

The method 300 may be implemented by a computer such as a user computer communicatively coupled to a user interface, or a server or cloud-based service (e.g., communicatively coupled to the user computer and/or user interface). The method 300 comprises the method 100 and refers to certain methods described below. Certain blocks of the method 300 may be omitted or performed in a different order to that shown by Figure 3.

After start 302 of the method 300, at block 304, the method 300 comprises calculating a start point for implementing landmark detection. The start point may be some landmark within the subject's body that the ML model is configured to recognize first as part of the landmark identification procedure according to block 102 of the method 100. An example start point is given in the description below.

At block 306 of the method 300, landmark detection is implemented (e.g., in accordance with block 102 of the method 100) to detect landmarks on target vessels (e.g., an ICA and/or VA).

In some embodiments, the ML model is trained to recognize the set of landmarks based on a training data set obtained from a plurality of training subjects. The radiographic imaging data obtained from each training subject may comprise a target vessel annotated with the set of landmarks to be recognized. For example, radiographic imaging data associated with each training subject may be annotated by a human trainer to indicate the set of landmarks associated with the target vessel in the training subject's body). The set of landmarks may be selected based on anatomical structure (e.g., bone or other tissue, etc.) associated with the vessel. For example, certain landmarks on the vessel may be relatively straightforward for the ML model to identify if a part of the vessel is adjacent to a certain anatomical structure that is relatively straightforward to distinguish from other anatomical structures. Thus, the part of the vessel that may be readily identified may be a candidate landmark to be used for the set of landmarks.

In one example, the training data set comprises radiographic imaging data obtained from 139 training subjects (i.e., 139 series). This radiographic imaging data may be obtained from the same or different types of radiographic imaging apparatus (e.g., from different equipment and/or from different countries). 129 of the 139 series were used for training where most of the data included 26 annotated landmarks per series (not every series had 26 landmarks). The remaining 10 of 139 series were used for verification of the training data set. There were approximately 3614 (139*26) landmarks in total in the training data set. A coordinate transformation method was used on the radiographic imaging data to prepare the data for the training procedure. In this example, a landmark detection accuracy rate of 96.680% was obtained from 138 test data sets (e.g., from the original series of training data).

According to the above example, when head and neck enhanced data is loaded, the trained ML model may be capable of detecting 26 landmarks (discussed below) in total on the internal carotid artery and vertebral artery.

As explained below, the detected landmarks may be optimized to improve the accuracy of the detected position of each landmark. Thus, once the ML model has determined the 'approximate' positions of the set of landmarks in the radiographic imaging data, a different method is used for the optimization (e.g., a non-ML model referred to as a 'gradient model' is used although it shall be appreciated that ML methods could be used instead).

At block 308 of the method 300, the detected landmarks are optimized (e.g., by finding their position more accurately) based on a gradient model of the expected profile of pixel intensity values (e.g., the 'pixel intensity values' may refer to the measured intensity at each spatial location (pixel) in the radiographic imaging data) over a cross-section of a vessel. For example, the vessel may have an elliptical (e.g., including circular) cross-section perpendicular to a path defined along the vessel. The initial landmark detection implemented at block 306 may not necessarily identify a point that is at the center of the vessel. However, by assuming that the pixel intensity values vary in a certain way (e.g., have an 'expected profile') across the cross-section, the center point of the vessel at the landmark can be calculated. In the gradient model described below, the center point of the vessel corresponds to the highest pixel intensity value, with the pixel intensity values decreasing radially from the center point. Thus, the optimization at block 308 may comprise identifying a region in the radiographic imaging data corresponding to the expected profile for a cross-section of the vessel, fitting the radiographic imaging data in the region according to the gradient model and calculating the center point based on the fitted data. As used herein, a cross-section may refer to any section of the imaging data (e.g., within an axial, coronal or sagittal plane, or in an oblique plane). The examples given herein refer to the axial cross-section although some examples make reference to sections in the other planes.

At block 310 of the method 300, which may correspond to an embodiment of block 104 of the method 100, a pixel intensity threshold (e.g., a 'CT value' threshold in the case of pixel intensity values derived from CT imaging) is estimated based on the pixel intensity values obtained in the vicinity of the detected set of landmarks. The pixel intensity threshold may be indicative of a path connecting adjacent landmarks in the set based on the radiographic imaging data. For example, the pixel intensity threshold may refer to similar pixel intensity values (e.g., within a range) obtained in the vicinity of each of the set of landmarks. It may be assumed that since each of these pixel intensity values correspond to vessel structure, other parts of the radiographic imaging data (e.g., within other CT slices) with similar pixel intensity values may also correspond to vessel structure. To prevent or avoid other anatomical features that are not vessel structure from being assumed to be parts of the vessel structure, the region within which to search for other parts of the vessel structure (e.g., using the pixel intensity threshold) may be constrained to the vicinity of the path of connected adjacent landmarks.

The radiographic imaging data may comprise a series of measured pixel intensity values acquired by the radiographic imaging apparatus. Without human input, the pixel intensity values may be relatively complex for a computer (e.g., a computer program executable by a processor) to interpret in terms of recognizing whether a certain pixel or set of pixels corresponds to a certain tissue. For example, a human may be able to visually examine an image and identify anatomical structures (including the vessels themselves) whereas a computer may not necessarily be able to automatically classify different anatomical structures if the measurements have similar values. For example, certain anatomical structures may be completely different but have similar measurements, which might not be understood by a computer.

By determining the pixel intensity threshold indicative of the path connecting adjacent landmarks, the method 300 may enable a computer to distinguish between relevant and irrelevant measurements e.g., for the purpose of automatically identifying the parts of the radiographic imaging data that are associated with the vessel (e.g., via the identified set of landmarks). In other words, appropriate identification of the pixel intensity threshold (e.g., based on the radiographic imaging data associated with the identified set of landmarks) may allow the method 300 to filter the radiographic imaging data based on the pixel intensity threshold so that the method 300 can determine whether or how the adjacent landmarks are connected. If there is more than one vessel, certain landmarks in the set may not be connected.

At block 312 of the method 300, which may or may not be implemented in conjunction with block 310, the vessel path such as a centerline between connected adjacent landmarks is extracted. In one implementation, this could be based on the shortest (straight) path between adjacent landmarks (e.g., based on the coordinates of the center points of the adjacent landmarks) although in other implementations, the path may be modelled on a different profile such as a curved profile.

At block 314 of the method 300, the boundary of the vessel is calculated. The boundary may refer to the wall of the vessel. The boundary calculation may be based on the imaging condition referred to in block 104 of the method 100. For example, the gradient model may assume that the pixel intensity values may vary in a characteristic way over the boundary (e.g., due to the change in structure). By identifying the parts in the radiographic imaging data showing such characteristic variations, it may be possible to calculate the boundary of the vessel. Using the information from the boundary calculation at each point along the path determined by block 312, it may be possible to determine the vessel shape between adjacent landmarks. This procedure may be extended along the vessel to extract, or segment, the vessel between the connected part of the vessel (i.e., the ICA and/or VA) associated with the aortic arch and/or the brain.

At block 316 of the method 300, the same procedure as described above may be used to extract the ICA and/or VA associated with the aortic arch segment.

At block 318 of the method 300, the same procedure as described above may be used to extract the ICA and/or VA associated with the brain vessel segment.

Block 320 of the method 300 comprises causing a user interface (e.g., the user interface 214) for displaying a simulation of the subject's body to indicate the shape of the vessel via the user interface.

At block 322, the method 300 ends.

Some further details of certain blocks of the method 300 are described below.

The internal carotid artery and vertebral artery are two commonly studied vessels in head and neck in radiographic imaging data.

Figures 4 and 5 show example views (side and front views) of three-dimensional reconstruction images of various anatomical features in the head and neck in a subject. In Figure 5, the landmark detection described herein has been performed and shows the locations of each of the detected landmarks 502 (see chevron arrows) based on the images shown in Figure 4. As indicated by Figure 5, some of the detected landmarks are 'adjacent' to each other.

Figure 6 shows a simpler representation of the landmarks depicted by chevron arrows in Figure 5. The landmarks are labelled, LX, in detection order, from index X = 0 to 25. Thus, L0 refers to the first detected landmark and L25 refers to the last detected landmark (i.e., 26 landmarks in total). Thus, the ML model is trained to recognize the landmarks LX within the radiographic imaging data, where each landmark LX is associated with an anatomical feature of the subject.

The number and accuracy of the landmarks may determine the integrity and correctness of vessel extraction. Since the range of landmarks may determine the range of vessel extraction, the selection of the landmarks for detection may be set according to size of the target vessel(s). For example, more landmarks may be needed for a long vessel and the position of the landmarks appropriately selected to cover the entire length of the vessel. If the detection target is not within the data range, the accuracy of detection may be reduced. Considering that the lowest part of head and neck CT scan generally contains aortic arch, in the example described here, three landmarks are selected on the three branches of aortic arch (i.e., the brachiocephalic trunk, left common carotid artery and left subclavian artery). The detection target may have certain characteristics to make the detection more accurate, for example, proximity to certain anatomical features. However, landmarks that are close to each other may tend to converge, which means redundancy may not be useful for vessel extraction. Therefore, the distribution of the landmarks across the detection range may be appropriately selected to avoid concentration of the too many landmarks that are close to each other, as well as ensuring a reasonably even distribution of landmarks across the entire vessel in the window. An example choice of the selected set of landmarks for the ICA and VA is shown by Figure 6.

Thus, in some embodiments, where the vessel comprises an ICA and/or VA, the set of landmarks comprise the specified set of landmarks 'LX' from at least one of the subject's ICA and VA identified by the ML model. These are shown as the left ICA and VA in Figures 4 and 5 but the method can be extended to the other ICA and/or VA and/or other vessels in the subject's body. Each landmark 'LX' of the specified set has an associated index 'X' and corresponding anatomical feature location as follows:

L0 is shared by the ICA and VA and is located at the brachiocephalic trunk of the subject's aortic arch.
L1 is located at the (e.g., left) common carotid artery of the aortic arch.
L2 is located at the (e.g., left) subclavian artery of the aortic arch.
L3 and L4 are located at a bifurcation point of the ICA and the subject's external carotid artery.
L5 and L8 are locations of the ICA around the subject's C6 cervical vertebra.
L9 and L14 are locations of the VA around the subject's C6 cervical vertebra.
L6 and L7 are locations of the ICA around the subject's C2 cervical vertebra.
L10 and L13 are locations of the VA around the subject's C2 cervical vertebra.
L11 and L12 are locations of the ICA around the subject's C1 cervical vertebra.
L15 and L18 are locations of the VA around the subject's C1 cervical vertebra.
L16 and L17 are locations of the ICA where blood is transferred to structures inside and outside of the skull.
L19 and L22 are locations of the VA on the subject's posterior fossa where the VA enters the subject's skull.
L20, L21, L23 and L24 are locations of the ICA inside the skull.
L25 is a location shared by both the subject's left VA and right VA.

The ML model may be configured to identify the specified set of landmarks, LX, in the order from X=0 to X=25. Thus, the model may first identify L0 and then identify the rest of the landmarks LX in order through to L25 at the end of the detection process. In Figure 6, the arrows represent the order of detection at each of the landmarks 'LX' (i.e., L1 is detected after L0, L3 is detected followed by L4, then L5 and L6 is detected followed by L7 and L8, etc.). The order is based on the proximity of the landmarks from each other. The closest landmark to L0 is L1 and the closest landmark to L2 is L1, and so on.

For the reason that different image pixel spacing may represent different characteristics, training images and detection images may have unified image pixel spacing. If the image pixel spacing is too large, the detection accuracy may decrease (the features near the landmarks are not obvious), and if the pixel spacing is too small, the calculation efficiency may be affected. Therefore, a large as possible pixel spacing is selected to improve detection accuracy and efficiency. According to the 138 radiographic imaging data sets used in testing, the pixel spacing of the calculation was chosen to be 0.8 mm.

In some embodiments, the landmark detection is performed by the ML model (such as the DQN model of some embodiments) using a Markov decision process (MDP). The ML model may be based on a convolutional neural network (CNN) architecture. As part of the MDP process, an artificial agent learns to make certain decisions that aim to find a target landmark. An environment may be defined within an input image. The agent navigates the environment using a set of actions (i.e., move up, down, left, right, forwards or backwards). The agent aims to find an anatomical landmark based on the results obtained from a set of actions (e.g., agent movement directions) and states (e.g., locations corresponding to potential landmark locations) along with a reward function (e.g., to indicate whether the agent is close to the ground truth target location). An agent may be considered to have found the target landmark when the agent oscillates about a location as it undertakes its actions, at which point the target landmark is considered to be located. In other words, a Q-value associated with the state is lower nearer a target landmark such that, during training, the agent may be rewarded when it finds the lowest Q-values at a location. During testing, the agent behaves according to the trained ML model and does not receive any rewards and/or update the model.

After landmark detection, a method is implemented (e.g., see block 306 of the method 300) to make sure the detected points are located on vessels (i.e., to ensure that the landmark is at the center of the vessel).

Figure 7 shows an example model of the cross-section of the vessel perpendicular to the path of the vessel. In this example model, which may be referred to as a gradient model, the highest pixel intensity value (represented by dark shading) is obtained at the center of the vessel while the radially outer positions have lower pixel intensity values (represented by relatively lighter shading). Thus, where the radiographic imaging data is indicative of the example model, the center point of the vessel can be located by finding the center of the ellipse (such as a circle). Thus, the location of the landmark may be optimized to the center of the vessel based on the gradient model.

In an example implementation with CT scan data, an iteration around the detection results is implemented. The center of the blood vessel is higher than the surrounding CT value. An evaluation function of vascular cross-section is designed to find the center of the nearest circular area. The gradient model may be based on the CT imaging values of vessels belonging to a normal distribution defined as:

$$f = e^{-\frac{(ct-M)^2}{\varepsilon}},$$

where ct is the CT imaging value of the point to be tested, M is the expectation CT value and $\varepsilon$ is a constant. M is a function of distance between tested point and objective point.

To prevent the improved/optimized point position going too far from the origin, the number of iterations is set to 3, and each iteration corresponds to movement by one pixel.

The landmarks L19, L22 and L25 may determine the region of VA but may not always be accurate enough. Therefore, a shape-based method as described above may improve the detection result.

A target landmark may be displayed on a viewing window within the user interface. The viewing window may be set such that an independent region of the target landmark (i.e., the vessel cross-section)is not connected to the window boundary. Thus, the window size may be predefined, for example, to be slightly bigger than the cross-section of the vessel.

For L25 (and/or any other landmarks), the vessel region may be connected to bone region (or other anatomical features that lead to vessel in the cross-section not being in an independent region within the window), so other parts of the radiographic imaging data may be used to find an independent region comprising the vessel associated with the landmark. For example, the (axial) cross-section may be checked initially. If there is no independent region in the cross-section, the coronal section may be checked next to identify whether or not there is an independent region, followed by the sagittal section (or in any other appropriate order).

Upon determining the detected landmarks, the pixel intensity threshold of target vessel and boundary of vessel region may be determined (e.g., in accordance with blocks 310 and 314 of the method 300). The pixel intensity threshold may be low enough to connect adjacent landmarks but, on the other hand, be high enough to avoid serious leakage to bone that connect to the vessel. In this example, the pixel intensity threshold is estimated by using the pixel intensity value from the 26 detected landmarks.

The path (e.g., corresponding to the center line) may be found by find the shortest connecting route between adjacent landmarks on the vessel.

In some embodiments, determining the path comprises identifying a pixel intensity threshold within the radiographic imaging data. The pixel intensity threshold may be indicative of identified landmarks being connected to form the path.

In some embodiments, the pixel intensity threshold is determined based on a minimum pixel intensity value to connect adjacent identified landmarks.

In some embodiments, the pixel intensity threshold is determined based on an average pixel intensity value associated with each of the identified landmarks. A range may be defined around the pixel intensity threshold, and only the pixel intensity values within this range may be selected for use in certain methods described herein.

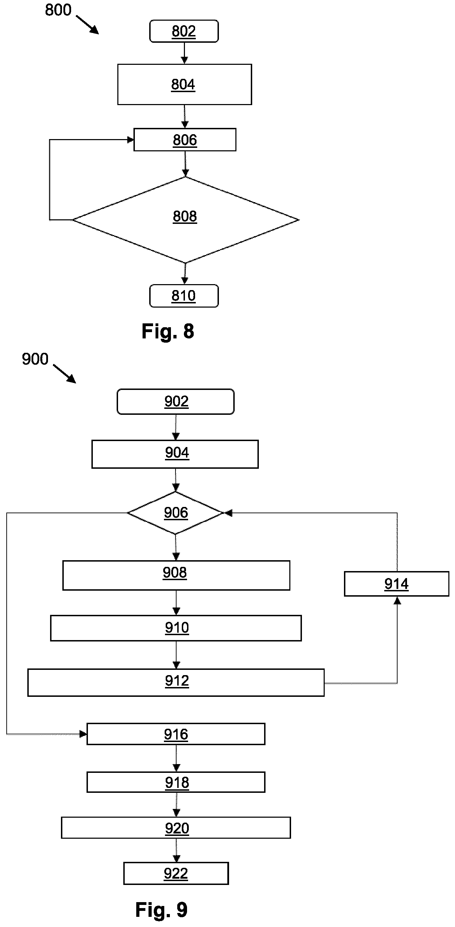

Figure 8 shows a method 800 for extracting (e.g., identifying) the path between connected landmarks. The method 800 may be implemented as part of the method 100 or 300 (e.g., according to block 312).

The method 800 starts at block 802. At block 804 of the method 800, a first landmark is set as a seed point within the radiographic imaging data. At block 806 of the method 806, the region around the seed point is grown such that at block 808 of the method 800, a determination is made regarding whether a second (adjacent) landmark is in the region. If not, the method 800 returns to block 806. If yes, the method 800 ends at block 810.

In some embodiments, the path is determined (e.g., according to block 312 and/or via the method 800) by identifying coordinates of corresponding vessel structures indicative of a vessel segment between adjacent landmarks and estimating a profile of the path based on the coordinates. In some embodiments, the identifying of the coordinates is based on the pixel intensity threshold.

In some embodiments, estimating the profile of the path comprises determining a shortest path between the adjacent landmarks by setting a first landmark as a seed point and, within an iteratively growing volumetric region, identifying a second landmark corresponding to the nearest landmark to the first landmark such that coordinates associated with the first and second landmarks define the path between the first and second landmarks.

The corresponding contour/profile for the path may be calculated based on each center point identified according to the method 800. For example, the contour/profile may be obtained taking the center point as a coordinate origin, establishing a local coordinate system, and calculating, for example, the X and Y direction vectors for the coordinate system through the adjacent center points.

To determine the coordinates of the wall of the vessel (e.g., in accordance with block 314 of the method 300), rays are radiated from each of the center points to find the sampling points meeting a local gradient value condition (e.g., the 'imaging condition') as the boundary. As discussed below, the calculation of the gradient condition that is indicative of the boundary may be based on selection of a strong boundary or a weak boundary model. Upon determination of the gradient condition based on the selected model (e.g., a 'gradient model'), the boundary coordinates around the center point can be determined according to the pixel intensity values within the section which correspond (fit) to the gradient condition. A smoothing algorithm (e.g., to produce an elliptical cross-section corresponding to the vessel bore-like shape) may be used to make the boundary more realistic (e.g., to avoid sharp transitions in distance from center point around the origin), depending on the concentration of the radial rays.

The 'local gradient value condition' may refer to the 'maximum gradient value' corresponding to the edge of the vessel (i.e., where the gradient is maximum, this corresponds to the edge of the vessel).

Thus, in some embodiments, determining the path comprises identifying a vessel structure corresponding to at least part of a cross-section of an ellipse and determining a center point of the ellipse, the center point defining a coordinate of a center line of the vessel defining the path.

In some embodiments, the imaging condition indicative of the wall of the vessel is based on a gradient condition indicative of presence of the wall.

In some embodiments, certain methods (e.g., block 314 of the method 300) comprise determining a coordinate corresponding to a center point of the vessel that defines an origin according to a local coordinate system and determining the shape of the vessel (e.g., the set of coordinates corresponding to the shape) within a vessel cross-section that is perpendicular to the path at the origin by simulating a plurality of rays extending radially from the origin until the gradient condition is met for each radial ray at a specified distance from the origin. The specified distance of each radial ray from the origin may be used to estimate a boundary within the vessel cross-section corresponding to at least part of the shape of the vessel.

In some embodiments, certain methods (e.g., part of block 104 of the method 100) comprise determining a vessel segment corresponding to the shape of the vessel between adjacent landmarks by connecting estimated boundaries from adjacent vessel cross-sections.

In some embodiments, the gradient condition is determined based on a gradient model of pixel intensity values in a vessel cross-section. The problem of identifying the gradient condition may be based on the model comprising a strong boundary model and a weak boundary model of the boundary. Either, or both, of these models of could be used to calculate the boundary. Therefore, the gradient condition may be determined by calculating the corresponding energy function for each model and selecting whether to use the strong or weak boundary model based on the smallest energy obtained by calculating the energy function based on the pixel intensity values.

Figure 9 shows a method 900 to determine the boundary (e.g., wall) of the vessel. The method 900 may be implemented as part of the method 100 or 300 (e.g., according to block 314).

The method 900 has two parts, the first part referring to vessel boundary detection and the second part referring to vessel smoothing. The 'i' in figure 9 refers to point identity in the path (e.g., the identity of each of the center points in the center line) and 'N' refers to the number of points in the path. In some cases, there may be around 100 sections (depending on the data's slice number) that are calculated with each section potentially including a center point.

The method 900 starts at block 902.

At block 904 of the method 900, the index 'i' of the center point is input.

At block 906 of the method 900, if 'i' is less than 'N', a local coordinate system is established at block 908, a boundary is then calculated based on the gradient condition at block 910 and an energy function is calculated at block 912 to optimize the boundary (e.g., to find the most likely coordinates of the boundary around the center point, 'i'. The index is increased according to 'i++' at block 914, after which the method 900 returns to block 906 to repeat blocks 908 to 912 for each center point identity.

Upon finding the boundaries for each center point (i.e., 'i=N'), the method 900 proceeds to block 916 where smoothing is performed within the plane of the center point (i.e., its cross-section). The method 900 then proceeds to block 918 where smoothing is performed across the planes (e.g., between adjacent boundaries around center points). The method 900 then proceeds to block 920 where the boundary around the path between adjacent center points is filled up to ensure that a smooth shape is defined for the vessel segment. In other words, after calculation of the vessel boundary on each cross section, a smoothing procedure is performed where the boundary each smoothed on each cross section and then the boundary defined by the segment between the adjacent cross-sections is smoothed (i.e., along the center line). The method 900 ends at block 922.

In some embodiments, the method 900 segments the vessels of the aortic arch and brain separately. Thus, potentially with a single button press, the four vessels (e.g., at least one ICA and/or at least one VA such as the left VA and/or the right VA), aortic arch and/or brain vessels could be extracted automatically.

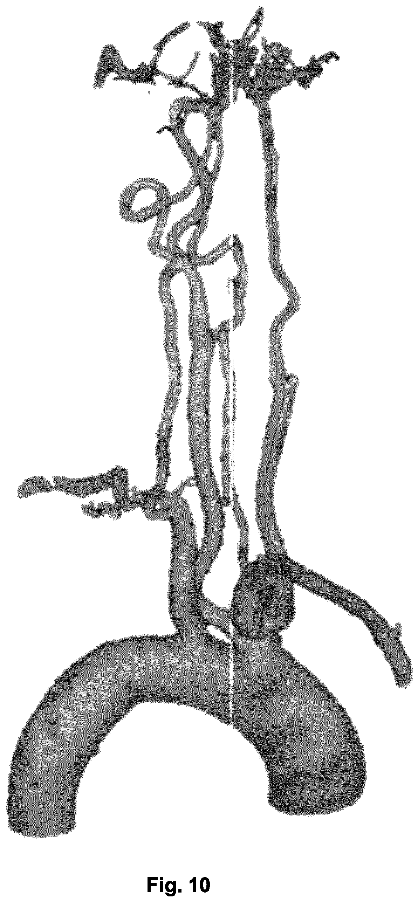

Figure 10 shows an example result of the segmentation in accordance with certain methods described herein where the vessels referred to above have been extracted and highlighted for a user interface (e.g., user interface 214) to display (e.g., in accordance with block 320 of the method 300). The methods described herein could be used to extract other vessels in a subject's body and is not limited to extracting the vessels shown in Figure 10.

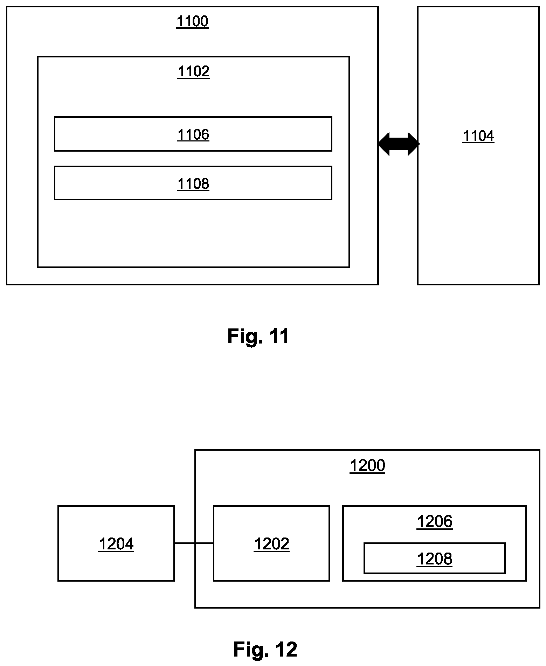

Figure 11 shows a tangible machine-readable medium 1100. The tangible machine-readable medium 1100 comprises instructions 1102 which, when executed on at least one processor 1104, cause the at least one processor 1104 to implement certain methods described herein. In this embodiment, the instructions 1102 comprise instructions 1106 which are configured to implement block 102 of the method 100. The instructions 1102 further comprise instructions 1108 which are configured to implement block 104 of the method 100. Any of the methods described herein may be implemented by virtue of tangible machine-readable medium 1100 causing the at least one processor 1104 to implement such methods.

Figure 12 shows a device 1200 for determining a shape of a vessel. The device 1200 comprises at least one processor 1202 (which may correspond to the at least one processor 212 referred to in Figure 2). The at least one processor 1202 is communicatively coupled to an interface 1204 (e.g., a 'receiving' interface) for receiving radiographic imaging data of a subject obtained by the radiographic imaging apparatus (e.g., radiographic imaging apparatus 202). The interface 1204 may be part of the computer 208 referred to in Figure 2.

The device 1200 further comprises a tangible machine-readable medium 1206 (which may correspond to the memory 210 of Figure 2) storing instructions 1208 readable and executable by the at least one processor 1202 to perform a method corresponding to certain methods described herein (e.g., any of the methods 100, 300, 800 and/or 900).

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment. The invention is defined by the appended claims.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, etc.) having computer readable program codes therein or thereon.

The present disclosure is described with reference to flow charts and block diagrams of the method, devices and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing circuitry, or a module thereof, may execute the machine readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method (100), comprising:

    identifying (102) a set of landmarks of a vessel in a subject's body using a machine learning, ML, model configured to identify adjacent landmarks of the vessel from radiographic imaging data of the subject's body; and
    determining (104):

        a path comprising identified adjacent landmarks in the set by identifying coordinates of corresponding vessel structures indicative of a vessel segment between adjacent landmarks and estimating a profile of the path based on the coordinates; and
        a shape of the vessel between the identified adjacent landmarks based on the determined path and an imaging condition indicative of a wall of the vessel, the imaging condition referring to a part of the radiographic imaging data that corresponds to a structure that represents the wall of the vessel.

2. The method of claim 1, wherein the ML model comprises a Deep Q Network, DQN, model.

3. The method of any of claims 1 to 2, wherein the ML model is trained to recognize the set of landmarks based on a training data set comprising radiographic imaging data obtained from a plurality of training subjects, wherein the radiographic imaging data obtained from each training subject comprises a target vessel annotated with the set of landmarks to be recognized.

4. The method of any of claims 1 to 3, wherein determining the path comprises identifying a pixel intensity threshold within the radiographic imaging data, wherein the pixel intensity threshold is indicative of identified landmarks being connected to form the path.

5. The method of claim 4, wherein the pixel intensity threshold is determined based on a minimum pixel intensity value and/or an average pixel intensity value associated with each of the identified landmarks.

6. The method of any one of claims 1 to 5, wherein estimating the profile of the path comprises determining a shortest path between the adjacent landmarks by setting a first landmark as a seed point and, within an iteratively growing volumetric region, identifying a second landmark corresponding to the nearest landmark to the first landmark such that coordinates associated with the first and second landmarks define the path between the first and second landmarks.

7. The method of any one of claims 1 to 6, wherein the imaging condition indicative of the wall of the vessel is based on a gradient condition indicative of presence of the wall.

8. The method of claim 7, comprising determining a coordinate corresponding to a center point of the vessel that defines an origin according to a local coordinate system and determining the shape of the vessel within a vessel cross-section that is perpendicular to the path at the origin by simulating a plurality of rays extending radially from the origin until the gradient condition is met for each radial ray at a specified distance from the origin, wherein the specified distance of each radial ray from the origin is used to estimate a boundary within the vessel cross-section corresponding to at least part of the shape of the vessel.

9. The method of claim 8, comprising determining a vessel segment corresponding to the shape of the vessel between adjacent landmarks by connecting estimated boundaries from adjacent vessel cross-sections.

10. The method of claim 7, 8 or 9, wherein the gradient condition is determined based on a gradient model of pixel intensity values in a vessel cross-section.

11. The method of any one of claims 1 to 10, wherein the vessel comprises an internal carotid artery, ICA, and/or vertebral artery, VA, wherein the set of landmarks comprise a specified set of landmarks, LX, from at least one of the subject's ICA and VA identified by the ML model, wherein each landmark, LX, of the specified set has an associated index, X, and corresponding anatomical feature location as follows:

    L0 is shared by the ICA and VA and is located at the brachiocephalic trunk of the subject's aortic arch;
    L1 is located at the common carotid artery of the aortic arch;
    L2 is located at the subclavian artery of the aortic arch;
    L3 and L4 are located at a bifurcation point of the ICA and the subject's external carotid artery;
    L5 and L8 are locations of the ICA around the subject's C6 cervical vertebra;
    L9 and L14 are locations of the VA around the subject's C6 cervical vertebra;
    L6 and L7 are locations of the ICA around the subject's C2 cervical vertebra;

L10 and L13 are locations of the VA around the subject's C2 cervical vertebra;

L11 and L12 are locations of the ICA around the subject's C1 cervical vertebra;

L15 and L18 are locations of the VA around the subject's C1 cervical vertebra;

L16 and L17 are locations of the ICA where blood is transferred to structures inside and outside of the skull;

L19 and L22 are locations of the VA on the subject's posterior fossa where the VA enters the subject's skull;

L20, L21, L23 and L24 are locations of the ICA inside the skull; and

L25 is a location shared by both the subject's left VA and right VA.

12. A tangible machine-readable medium (1100) comprising instructions (1102) which, when executed by at least one processor (1104), cause the at least one processor to implement the method according to any one of claims 1 to 11.

13. A data processing device (1200) for extracting vessel information from radiographic imaging data of a subject, the device comprising:

at least one processor (1202) communicatively coupled to an interface (1204) for receiving the radiographic imaging data; and
a tangible machine-readable medium (1206) storing instructions (1208) readable and executable by the at least one processor to perform a method comprising:

identifying (102) a set of landmarks of a vessel in a subject's body using a machine learning, ML, model configured to identify adjacent landmarks of the vessel from radiographic imaging data of the subject's body; and
determining (104):

a path comprising identified adjacent landmarks in the set by identifying coordinates of corresponding vessel structures indicative of a vessel segment between adjacent landmarks and estimating a profile of the path based on the coordinates; and
a shape of the vessel between the identified adjacent landmarks based on the determined path and an imaging condition indicative of a wall of the vessel, the imaging condition referring to a part of the radiographic imaging data that corresponds to a structure that represents the wall of the vessel.

## Patentansprüche

1. Computerimplementiertes Verfahren (100), umfassend:

Identifizieren (102) einer Menge von Orientierungspunkten eines Gefäßes im Körper eines Subjekts unter Verwendung eines maschinellen Lernmodells (ML), das so konfiguriert ist, dass es benachbarte Orientierungspunkte des Gefäßes aus Röntgenbilddaten des Körpers des Subjekts identifiziert; und
Bestimmen (104):

eines Pfades, der identifizierte benachbarte Orientierungspunkte in der Menge umfasst, indem Koordinaten entsprechender Gefäßstrukturen identifiziert werden, die ein Gefäßsegment zwischen benachbarten Orientierungspunkten anzeigen, und basierend auf den Koordinaten ein Profil des Pfads geschätzt wird; und
einer Form des Gefäßes zwischen den identifizierten benachbarten Orientierungspunkten basierend auf dem bestimmten Pfad und einem Abbildungszustand, der eine Wand des Gefäßes anzeigt, wobei sich der Abbildungszustand auf einen Teil der Röntgenbilddaten bezieht, der einer Struktur entspricht, die die Wand des Gefäßes darstellt.

2. Verfahren nach Anspruch 1, wobei das ML-Modell ein Deep-Q-Network, DQN-, Modell umfasst.

3. Verfahren nach einem der Ansprüche 1 bis 2, wobei das ML-Modell darauf trainiert wird, die Menge von Orientierungspunkten basierend auf einem Trainingsdatensatz zu erkennen, der Röntgenbilddaten umfasst, die von einer Vielzahl von Trainingssubjekten erhalten wurden, wobei die von jedem Trainingssubjekt erhaltenen Röntgenbilddaten ein Zielgefäß umfassen, das mit der Menge von zu erkennenden Orientierungspunkten annotiert ist.

4. Verfahren nach einem der Ansprüche 1 bis 3, wobei das Bestimmen des Pfads das Identifizieren eines Pixelintensitäts-Schwellenwerts innerhalb der Röntgenbilddaten umfasst, wobei der Pixelintensitäts-Schwellenwert anzeigt, dass identifizierte Orientierungspunkte verbunden sind, um den Pfad zu bilden.

5. Verfahren nach Anspruch 4, wobei der Pixelintensitäts-Schwellenwert basierend auf einem minimalen Pixelintensitätswert und/oder einem durchschnittlichen Pixelintensitätswert bestimmt wird, der jedem der identifizierten Orientierungspunkte zugeordnet ist.

**6.** Verfahren nach einem der Ansprüche 1 bis 5, wobei das Schätzen des Pfadprofils das Bestimmen eines kürzesten Pfads zwischen den benachbarten Orientierungspunkten umfasst, indem ein erster Orientierungspunkt als Kontrollpunkt festgelegt wird und innerhalb einer iterativ wachsenden volumetrischen Region ein zweiter Orientierungspunkt identifiziert wird, der dem Orientierungspunkt entspricht, der dem ersten Orientierungspunkt am nächsten liegt, sodass die dem ersten und dem zweiten Orientierungspunkt zugeordneten Koordinaten den Pfad zwischen dem ersten und dem zweiten Orientierungspunkt definieren.

**7.** Verfahren nach einem der Ansprüche 1 bis 6, wobei der die Gefäßwand anzeigende Abbildungszustand auf einem Gradientenzustand basiert, der das Vorhandensein der Wand anzeigt.

**8.** Verfahren nach Anspruch 7, umfassend das Bestimmen einer Koordinate, die einem Mittelpunkt des Gefäßes entspricht, der einen Ursprung gemäß einem lokalen Koordinatensystem definiert, und das Bestimmen der Form des Gefäßes innerhalb eines Gefäßquerschnitts, der senkrecht zum Pfad am Ursprung ist, durch Simulieren einer Vielzahl von Strahlen, die radial vom Ursprung ausgehen, bis der Gradientenzustand für jeden radialen Strahl in einem spezifizierten Abstand vom Ursprung erfüllt ist, wobei der spezifizierte Abstand jedes radialen Strahls vom Ursprung verwendet wird, um eine Grenze innerhalb des Gefäßquerschnitts abzuschätzen, die mindestens einem Teil der Form des Gefäßes entspricht.

**9.** Verfahren nach Anspruch 8, das das Bestimmen eines Gefäßsegments umfasst, das der Form des Gefäßes zwischen benachbarten Orientierungspunkten entspricht, indem geschätzte Grenzen von benachbarten Gefäßquerschnitten verbunden werden.

**10.** Verfahren nach Anspruch 7, 8 oder 9, wobei der Gradientenzustand basierend auf einem Gradientenmodell von Pixelintensitätswerten in einem Gefäßquerschnitt bestimmt wird.

**11.** Verfahren nach einem der Ansprüche 1 bis 10, wobei das Gefäß eine innere Halsschlagader, ICA, und/oder Vertebralarterie, VA, umfasst, wobei die Menge von Orientierungspunkten eine spezifizierte Menge von Orientierungspunkten, LX, von mindestens einer der ICA und VA des Subjekts umfasst, die durch das ML-Modell identifiziert wurden, wobei jeder Orientierungspunkt, LX, der spezifizierten Menge einen zugehörigen Index, X, und eine entsprechende anatomische Merkmalsposition wie folgt aufweist:

L0 wird von der ICA und der VA gemeinsam genutzt und befindet sich am Truncus brachiocephalicus des Aortenbogens des Subjekts.

L1 befindet sich an der gemeinsamen Halsschlagader des Aortenbogens;

L2 befindet sich an der Arteria subclavia des Aortenbogens;

L3 und L4 befinden sich an einem Gabelungspunkt der ICA und der äußeren Halsschlagader des Patienten;

L5 und L8 sind Positionen der ICA um den Halswirbel C6 des Subjekts;

L9 und L14 sind Positionen der VA um den Halswirbel C6 des Subjekts;

L6 und L7 sind Positionen der ICA um den Halswirbel C2 des Subjekts;

L10 und L13 sind Positionen der VA um den Halswirbel C2 des Subjekts;

L11 und L12 sind Positionen der ICA um den Halswirbel C1 des Subjekts;

L15 und L18 sind Positionen der VA um den Halswirbel C1 des Subjekts;

L16 und L17 sind Positionen der ICA, wo Blut zu Strukturen innerhalb und außerhalb des Schädels transportiert wird;

L19 und L22 sind Positionen der VA in der hinteren Schädelgrube des Subjekts, wo die VA in den Schädel des Subjekts eintritt;

L20, L21, L23 und L24 sind Positionen der ICA im Innern des Schädels; und

L25 ist eine Position, die sowohl von der linken als auch von der rechten VA des Subjekts gemeinsam genutzt wird.

**12.** Greifbares maschinenlesbares Medium (1100), das Anweisungen (1102) umfasst, die, wenn sie von mindestens einem Prozessor (1104) ausgeführt werden, den mindestens einen Prozessor veranlassen, das Verfahren nach einem der Ansprüche 1 bis 11 zu implementieren.

**13.** Datenverarbeitungsvorrichtung (1200) zum Extrahieren von Gefäßinformationen aus Röntgenbilddaten eines Subjekts, wobei die Vorrichtung Folgendes umfasst:

mindestens einen Prozessor (1202), der kommunikativ mit einer Schnittstelle (1204) zum Empfangen der Röntgenbilddaten gekoppelt ist; und

ein greifbares maschinenlesbares Medium (1206), das Anweisungen (1208) speichert, die von dem mindestens einen Prozessor gelesen und ausgeführt werden können, um ein Verfahren durchzuführen, das Folgendes umfasst:

Identifizieren (102) einer Menge von Orientierungspunkten eines Gefäßes im Körper eines Subjekts unter Verwendung eines maschinellen Lernmodells (ML), das so konfiguriert ist, dass es benachbarte Orientierungspunkte des Gefäßes aus Röntgenbilddaten des Körpers des Subjekts identifiziert; und

Bestimmen (104):

eines Pfades, der identifizierte benachbarte Orientierungspunkte in der Menge umfasst, indem Koordinaten entsprechender Gefäßstrukturen identifiziert werden, die ein Gefäßsegment zwischen benachbarten Orientierungspunkten anzeigen, und basierend auf den Koordinaten ein Profil des Pfads geschätzt wird; und

einer Form des Gefäßes zwischen den identifizierten benachbarten Orientierungspunkten basierend auf dem bestimmten Pfad und einem Abbildungszustand, der eine Wand des Gefäßes anzeigt, wobei sich der Abbildungszustand auf einen Teil der Röntgenbilddaten bezieht, der einer Struktur entspricht, die die Wand des Gefäßes darstellt.

## Revendications

1. Procédé mis en œuvre par ordinateur (100) comprenant :

l'identification (102) d'un ensemble de repères d'un vaisseau dans le corps d'un sujet à l'aide d'un modèle d'apprentissage automatique, ML, configuré pour identifier les repères adjacents du vaisseau à partir de données d'imagerie radiographique du corps du sujet ; et

la détermination (104) :

d'un chemin comprenant des points de repère adjacents identifiés dans l'ensemble en identifiant les coordonnées des structures de vaisseau correspondantes indiquant un segment de vaisseau entre des points de repère adjacents et en estimant un profil du chemin sur la base des coordonnées ; et

d'une forme du vaisseau entre les points de repère adjacents identifiés sur la base du chemin déterminé et une condition d'imagerie indiquant une paroi du vaisseau, la condition d'imagerie faisant référence à une partie des données d'imagerie radiographique qui correspond à une structure qui représente la paroi du vaisseau.

2. Procédé selon la revendication 1, dans lequel le modèle ML comprend un modèle de réseau Q profond, DQN.

3. Procédé selon l'une quelconque des revendications 1 à 2, dans lequel le modèle ML est formé pour reconnaître l'ensemble de points de repère sur la base d'un ensemble de données de formation comprenant des données d'imagerie radiographique obtenues à partir d'une pluralité de sujets de formation, dans lequel les données d'imagerie radiographique obtenues à partir de chaque sujet de formation comprennent un vaisseau cible annoté avec l'ensemble de points de repère à reconnaître.

4. Procédé selon l'une quelconque des revendications 1 à 3, dans lequel la détermination du chemin comprend l'identification d'un seuil d'intensité de pixel dans les données d'imagerie radiographique, dans lequel le seuil d'intensité de pixel indique des points de repère identifiés qui sont connectés pour former le chemin.

5. Procédé selon la revendication 4, dans lequel le seuil d'intensité de pixel est déterminé sur la base d'une valeur d'intensité de pixel minimale et/ou d'une valeur d'intensité de pixel moyenne associée à chacun des points de repère identifiés.

6. Procédé selon l'une quelconque des revendications 1 à 5, dans lequel l'estimation du profil du trajet comprend la détermination d'un trajet le plus court entre les points de repère adjacents en définissant un premier point de repère comme point de départ et, dans une région volumétrique à croissance itérative, l'identification d'un second point de repère correspondant au point de repère le plus proche du premier point de repère de telle sorte que les coordonnées associées aux premier et second points de repère définissent le trajet entre les premier et second points de repère.

7. Procédé selon l'une quelconque des revendications 1 à 6, dans lequel la condition d'imagerie indicative de la paroi du vaisseau est basée sur une condition de gradient indicative de la présence de la paroi.

8. Procédé selon la revendication 7, comprenant la détermination d'une coordonnée correspondant à un point central du vaisseau qui définit une origine selon un système de coordonnées local et la détermination de la forme du vaisseau dans une section transversale du vaisseau qui est perpendiculaire au trajet à l'origine en simulant une pluralité de rayons s'étendant radialement à partir de l'origine jusqu'à ce que la condition de gradient soit satisfaite pour chaque rayon radial à une distance spécifiée de l'origine, dans lequel la distance spécifiée de chaque rayon radial à partir de l'origine est utilisée pour estimer une limite dans la section transversale du vaisseau correspondant à au moins une partie de la forme du vaisseau.

9. Procédé selon la revendication 8, comprenant la détermination d'un segment de vaisseau correspondant à la forme du vaisseau entre des points de repère adjacents en reliant des limites estimées à partir de sections transversales de vaisseau adjacentes.

10. Procédé selon la revendication 7, 8 ou 9, dans lequel la condition de gradient est déterminée sur la base d'un modèle de gradient de valeurs d'intensité de pixels dans une section transversale de vaisseau.

11. Procédé selon l'une quelconque des revendications 1 à 10, dans lequel le vaisseau comprend une artère carotide interne, ICA, et/ou artère vertébrale, VA, dans lequel l'ensemble de repères comprend un ensemble spécifié de repères, LX, provenant d'au moins l'une des artères ICA et VA du sujet identifiées par le modèle ML, dans lequel chaque repère, LX, de l'ensemble spécifié présente un index associé, X, et un emplacement de caractéristique anatomique correspondant comme suit :

L0 est partagé par l'ICA et la VA et est situé au niveau du tronc brachiocéphalique de l'arc aortique du sujet ;
L1 est situé au niveau de l'artère carotide commune de l'arc aortique ;
L2 est situé au niveau de l'artère sous-clavière de l'arc aortique ;
L3 et L4 sont situés à un point de bifurcation de l'ICA et de l'artère carotide externe du sujet ;
L5 et L8 sont les emplacements de l'ICA autour de la vertèbre cervicale C6 du sujet ;
L9 et L14 sont les emplacements de la VA autour de la vertèbre cervicale C6 du sujet ;
L6 et L7 sont les emplacements de l'ICA autour de la vertèbre cervicale C2 du sujet ;
L10 et L13 sont les emplacements de la VA autour de la vertèbre cervicale C2 du sujet ;
L11 et L12 sont les emplacements de l'ICA autour de la vertèbre cervicale C1 du sujet ;
L15 et L18 sont les emplacements de la VA autour de la vertèbre cervicale C1 du sujet ;
L16 et L17 sont des emplacements de l'ICA où le sang est transféré vers les structures à l'intérieur et à l'extérieur du crâne ;
L19 et L22 sont les emplacements de la VA sur la fosse postérieure du sujet où la VA pénètre dans le crâne du sujet ;
L20, L21, L23 et L24 sont les emplacements de l'ICA à l'intérieur du crâne ; et
L25 est un emplacement partagé par la VA gauche et la VA droite du sujet.

12. Support (1100) tangible lisible par machine comprenant des instructions (1102) qui, lorsqu'elles sont exécutées sur au moins un processeur (1104), amènent le au moins un processeur à mettre en œuvre le procédé selon l'une quelconque des revendications 1 à 11.

13. Dispositif de traitement de données (1200) permettant d'extraire des informations sur les vaisseaux à partir de données d'imagerie radiographique d'un sujet, le dispositif comprenant :

au moins un processeur (1202) couplé en communication à une interface (1204) pour recevoir les données d'imagerie radiographique ; et
un support tangible lisible par machine (1206) stockant des instructions (1208) lisibles et exécutables par le au moins un processeur pour effectuer un procédé comprenant :

l'identification (102) d'un ensemble de repères d'un vaisseau dans le corps d'un sujet à l'aide d'un modèle d'apprentissage automatique, ML, configuré pour identifier les repères adjacents du vaisseau à partir de données d'imagerie radiographique du corps du sujet ; et
la détermination (104) :

d'un chemin comprenant des points de repère adjacents identifiés dans l'ensemble en identifiant les coordonnées des structures de vaisseau correspondantes indiquant un segment de vaisseau entre des points de repère adjacents et en estimant un profil du chemin sur la base des coordonnées ; et
d'une forme du vaisseau entre les points de repère adjacents identifiés sur la base du chemin déterminé et une condition d'imagerie indiquant une paroi du vaisseau, la condition d'imagerie faisant référence à une partie des données d'imagerie radiographique qui correspond à une structure qui représente la paroi du vaisseau.

100

| 102 |
|-----|

| 104 |
|-----|

**Fig. 1**

200

| 208 |
|-----|
| **210** |
| **212** |

| 214 |
|-----|

202

204

206

**Fig. 2**

Fig. 3

**Fig. 4**

Adjacent
landmarks
502

Adjacent
landmarks
502

**Fig. 5**

**Fig. 6**

**Fig. 7**

800

802

804

806

808

810

**Fig. 8**

900

902

904

906

908

914

910

912

916

918

920

922

**Fig. 9**

Fig. 10

1100

1102

1106

1108

1104

**Fig. 11**

1200

1204

1202

1206

1208

**Fig. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160328855 A